# EUROPEAN PATENT APPLICATION

(11) **EP 1 786 167 A2**
(43) Date of publication of application: **16.05.2007**
(21) Application number: 06004269.4
(22) Date of filing: 02.03.2006
(51) Int. Cl.: H04L 29/06

(54) **Information processing system and method of assigning information processing device**

(30) Priority: 10.11.2005 JP 2005326218
(71) Applicant: HITACHI, LTD., Chiyoda-ku Tokyo 100-8280 (JP)
(72) Inventor: Konno, Masahiro, 1-chome Chiyoda-ku, Tokyo 100-8220 (JP); Mizoguchi, Yukinobu, 1-chome Chiyoda-ku, Tokyo 100-8220 (JP); Fukushima, Tsuyoshi, 1-chome Chiyoda-ku, Tokyo 100-8220 (JP); Takahashi, Hiroshi, 1-chome Chiyoda-ku, Tokyo 100-8220 (JP); Mikami, Takashi, 1-chome Chiyoda-ku, Tokyo 100-8220 (JP)
(74) Representative: Strehl Schübel-Hopf & Partner

(57) **Abstract**

For the first use of an authentication device, a remote machine makes a query of an address of a local machine to be permanently assigned to the remote machine, to which the authentication device is connected, to a management server. In response to the query, the management server determines the local machine to be permanently assigned to the remote machine and notifies the remote machine of an address of the local machine. The remote machine remotely controls the local machine specified by the address notified from the management server.

## Description

### Claim of Priority

The present application claims priority from Japanese application P2005-326128 filed on November 10, 2005, the content of which is hereby incorporated by reference into this application.

### Background of the Invention

The present invention relates to an information processing system including a plurality of information processing devices and remote control terminals, which are connected to each other through a network, in particular, a technique of assigning the information processing devices to the remote control terminals.

JP 2004-086241 A discloses a technique of detecting a virus infection source in a LAN system. In the disclosed technique, when a client computer invaded by a virus informs a server computer of virus entry by means of e-mail, an access history acquisition program of the server computer collects access histories from an access history database in the client computer that has sent the e-mail to analyze the collected access histories.

Moreover, a so-called information processing system of a thin client type has recently been a focus of attention. In the information processing system of a thin client type, a readily available remote machine is used to remotely control a desktop of a local machine located at home or office so as to use various application programs and data loaded on the local machine. As the local machine, besides a personal computer (PC), a server that does not have any locally connected input/output devices (a keyboard, a mouse, and a display) (for example, a blade server) is used.

### Summary of the Invention

An anti-virus technique of disconnecting a computer from a network so as to prevent secondary infection of the other computers upon detection of the virus infection of the computer is known. Conventionally, in an information processing system of a thin client type, if the anti-virus technique is applied to the local machine, the following problem arises. Specifically, since the remote machine can no longer access the local machine, the remote machine cannot learn a status of the local machine. If the local machine is a PC, the status of the local machine can be immediately confirmed by using an input/output device locally connected to the local machine. However, if the local machine is a server that does not have any locally connected input/output devices, the status of the local machine cannot be immediately confirmed once the computer is disconnected from the network.

Moreover, in the conventional information processing system of a thin client type, an address of the local machine is assigned to the remote machine in advance. Specifically, the local machine is assigned to the remote machine even before the use, and therefore, the resources of the local machine cannot be effectively used.

The present invention has been made in view of the above-described problems and therefore has an object to provide an information processing system of a thin client type enabling effective use of resources (local machine). Another object of the present invention is to provide the information processing system of a thin client type enabling a remote machine to learn a status of the local machine.

In order to achieve the above objects, according to a first aspect of the present invention, when a terminal (remotemachine) uses an information processing device (local machine) for the first time, the terminal makes a query of an address of the information processing device to be assigned to the self terminal to a management server. Then, the terminal remotely controls the information processing device specified by the address notified from the management server.

For example, according to the first aspect of the present invention, an information processing system includes:
a plurality of information processing devices;
a management server which manages the information processing devices; and
a plurality of terminals,
the plurality of information processing devices, the management server, and the plurality of terminals being connected to each other through a network. In the information processing system,
the management server includes:
   assignment status storage means which stores a terminal assignment status of each of the plurality of information processing devices; and
   assignment management means which notifies, in response to an assignment request, the terminal that has transmitted the assignment request of an address of the information processing device whose terminal assignment status stored in the assignment status storage means is an unassigned status and updates the terminal assignment status of the information processing device stored in the assignment status storage means from the unassigned status to a status indicating that the information processing device is to be assigned to the terminal that has transmitted the assignment request,
   the terminal includes:
      address storage means which stores at least an address of the management server;
      assignment request means which transmits an assignment request to the address of the management server stored in the address storage means when the address storage means does not store an address of the information processing device assigned to the self terminal and receives the address of the information processing device assigned to the self terminal from the management server to store the received address in the address storage means; and
      remote control means which transmits operation information input to an input device of the terminal to the address of the information processing device when the address storage means stores the address of the information processing device assigned to the self terminal and receives image information from the information processing device to display the received image information on a display device of the terminal, and
      each of the information processing devices includes remote control accepting means which receives the operation information from the terminal to perform an information processing in accordance with the content of operation indicated by the operation information and transmits image information indicating the result of the information processing to the terminal.

Moreover, according to a second aspect of the present invention, when the information processing device (local machine) detects virus infection, the information processing device first notifies the management server to that effect and then is disconnected from the network.

For example, according to the second aspect of the present invention, in an information processing system, each of the information processing devices further includes network disconnection means which detects computer virus infection and notifies the management server of the computer virus infection to disconnect the self information processing device from the network.

According to the present invention, when the terminal uses the information processing device for the first time, the terminal makes a query of an address of the information processing device to be assigned to the self terminal to the management server. Upon reception of the query, the management server determines the information processing device to be assigned to the terminal. Therefore, the resources (information processing device) canbe effectively used. Moreover, according to the present invention, when the information processing device detects virus infection, the information processing device first notifies the management server of the virus infection and then is disconnected from the network. Therefore, the terminal is able to learn a status of the information processing device.

### Brief Description of the Drawings

In the accompanying drawings:
FIG. 1 is a schematic diagram of a remote desktop system to which an embodiment of the present invention is applied;
FIG. 2 is a schematic diagram of a local machine 1;
FIG. 3 is a diagram for explaining an operation of the local machine 1;
FIG. 4 is a schematic diagram of a management server 7;
FIG. 5 is a diagram schematically showing an assignment status management table 7042;
FIG. 6 is a diagram schematically showing an operation status management table 7043;
FIG. 7 is a diagram for explaining an operation of the management server 7;
FIG. 8 is a schematic diagram of a remote machine 2;
FIG. 9 is a diagram for explaining an operation of the remote machine 2;
FIG. 10 is a diagram for explaining an operation of the remote machine 2;
FIG. 11 is a schematic diagram of an authentication device 6;
FIG. 12 is a diagram for explaining an operation of the authentication device 6;
FIG. 13 is a diagram showing an example of operation in a case where an address of the local machine 1 permanently assigned to the remote machine 2, to which the authentication device 6 is connected, is not registered in the authentication device 6;
FIG. 14 is a diagram showing an example of operation when the permanently assigned local machine 1 is disconnected from a network for virus infection in a case where an address of the local machine 1 permanently assigned to the remote machine 2, to which the authentication device 6 is connected, is registered in the authentication device 6 and an address of the local machine 1 temporarily assigned to the remote machine 2 is not registered in the authentication device 6;
FIG. 15 is a diagram showing an example of operation when the permanently assigned local machine 1 is stopped in a case where an address of the local machine 1 permanently assigned to the remote machine 2, to which the authentication device 6 is connected, is registered in the authentication device 6 and an address of the local machine 1 temporarily assigned to the remote machine 2 is not registered in the authentication device 6; and
FIG. 16 is a diagram showing an example of an operation when the local machine 1 permanently assigned to the remote machine 2 has recovered in a case where an address of the local machine 1 temporarily assigned to the remote machine 2, to which the authentication device 6 is connected, is registered in the authentication device 6.

### Description of the Preferred Embodiment

Hereinafter, an embodiment of the present invention will be described.

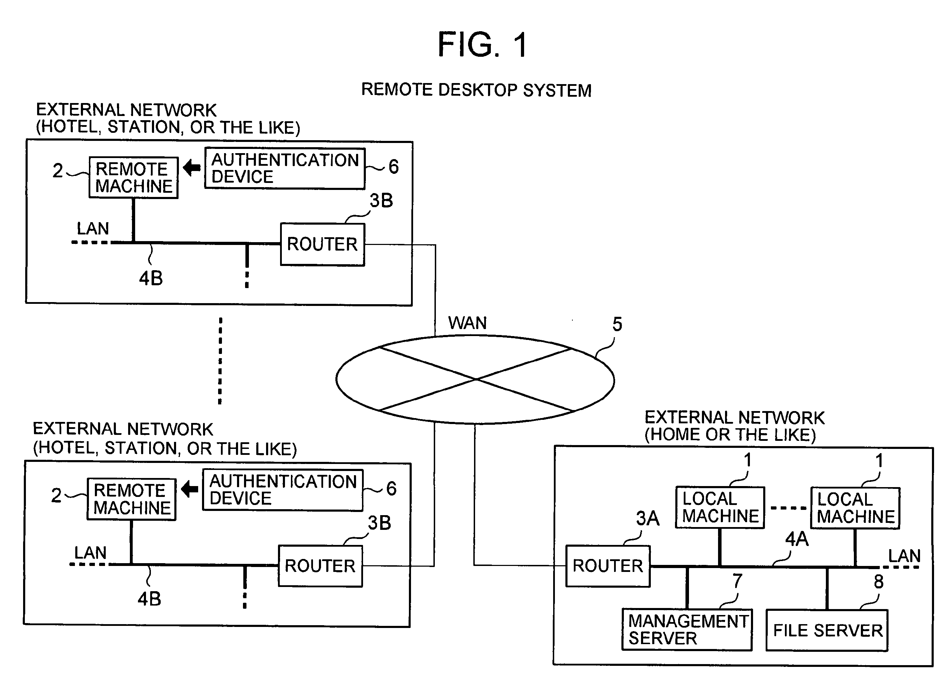

FIG. 1 is a schematic diagram of a remote desktop system (information processing system of a thin client type) to which an embodiment of the present invention is applied.

As illustrated, the remote desktop system according to this embodiment includes: a plurality of local machines 1; a plurality of remote machines 2 and authentication devices 6; a management server 7; and a file server 8. The plurality of local machines 1, the management server 7, and the file server 8 are connected to a local area network (LAN) 4A serving as an internal network constructed at home or the like. The LAN 4A is connected to a wide area network (WAN) 5 through a router 3A. The authentication device 6 can be attached to and removed from the remote machine 2. The remote machine 2 is connected to a LAN 4B serving as an external network constructed at a remote site such as a hotel or a station. The LAN 4B is connected to the WAN 5 through a router 3B.

The local machine 1 constructs a virtual private network (VPN) with respect the remote machine 2. The local machine 1 receives and processes input information (content of operation of an input device) transmitted from the remote machine 2 and transmits image information indicating a processing result (a desktop screen of a display device) to the remote machine 2. The local machine 1 is a computer such as a blade server, which is used normally without an input/output device being locally connected.

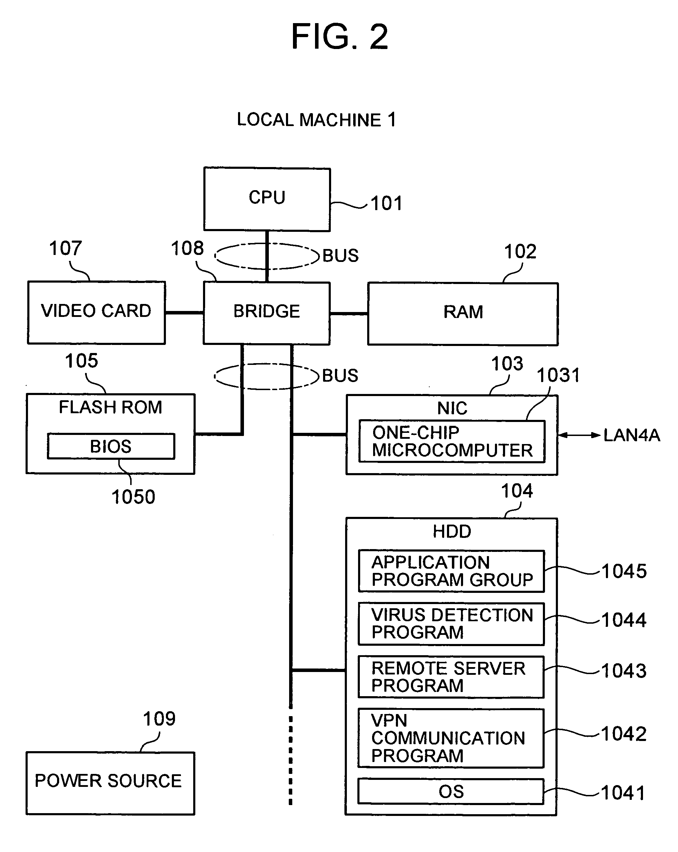

FIG. 2 is a schematic diagram of the local machine 1. As illustrated, the local machine 1 includes: a central processing unit (CPU) 101; a random access memory (RAM) 102 which functions as a work area for the CPU 101; a network interface card (NIC) 103 which is used to connect to the LAN 4A; a hard disk drive (HDD) 104; a flash read only memory (ROM) 105; a video card 107 which generates image information of the desktop; a bridge 108 which relays buses BUS which connect those components 101 to 107 to one another; and a power source 109.

The flash ROM 105 stores a Basic input/output system (BIOS) 1050. After power-on of the power source 109, the CPU 101 first accesses the flash ROM 105 to execute the BIOS 1050, thereby recognizing a system configuration of the local machine 1.

The HDD 104 stores at least an operating system (OS) 1041, a VPN communication program 1042, a remote server program 1043, a virus detection program 1044, and a plurality of application programs 1045.

The OS 1041 is a program which allows the CPU 101 to integrally control the components 102 to 109 of the local machine 1 to execute each of the programs 1042 to 1044 as described below. The CPU 101 loads the OS 1041 from the HDD 104 on the RAM 102 to execute the OS 1041 in accordance with the BIOS 1050. As a result, the CPU 101 integrally controls the components 102 to 109 of the local machine 1.

The VPN communication program 1042 is a communication program which is used to construct the VPN with respect to the remote machine 2, for example, is a communication program using an Security Architecture for the internet protocol (IPsec). The CPU 101 loads the VPN communication program 1042 from the HDD 104 on the RAM 102 to execute the VPN communication program 1042 in accordance with the OS 1041. As a result, the CPU 101 constructs the VPN with respect to the remote machine 2 in accordance with a communication start request received from the remote machine 2 through the NIC 103 to perform communications with the remote machine 2 through the VPN.

The remote server program 1043 is a program which allows the desktop of the local machine 1 to be remotely controlled by the remote machine 2, for example, a server program of virtual network computing (VNC) developed by AT & T Laboratories Cambridge. The CPU 101 loads the remote server program 1043 from the HDD 104 on the RAM 102 to execute the remote server program 1043 in accordance with the OS 1041. As a result, the CPU 101 receives and processes input information (content of operation of a keyboard and a mouse) transmitted from the remote machine 2 through the VPN and transmits image information (a desktop screen of the display) indicating the processing result to the remote machine 2 through the VPN.

The virus detection program 1044 serves to clean the virus from files stored in the RAM 102 and the HDD 104. The virus detection program 1044 compares each of the files stored in the RAM 102 and the HDD 104 with prepared virus patterns to detect computer virus infection of the file. Then, the virus detection program 1044 isolates or cleans the computer virus from the file in which the virus is detected. If the detected computer virus cannot be isolated or cleaned, the virus detection program 1044 first notifies the management server 7 to that effect, requests the OS 1041 to stop a driver of the NIC 103, and then disconnects the local machine 1 from the LAN 4A.

As the application programs 1045, there are a general-purpose Web browser program, a word processor program, a spreadsheet program, and the like. The CPU 101 responds to an instruction received from the keyboard and the mouse through the I/O connector 106 or an instruction received from the remote machine 2 through the remote server program 1043 to load the desired application program 1045 from the HDD 104 on the RAM 102, to execute the loaded application program in accordance with the OS 1041. Then, image information of a desktop screen, onwhich the result of execution is reflected, is generated by the video card 107 to be transmitted to the remote machine 2 through the remote server program 1043.

The NIC 103 is loaded with a one-chip microcomputer 1031. The one-chip microcomputer 103 monitors a power supply status of the power source 109 to the NIC 103. When the power supply from the power source 109 to the NIC 103 is lost, the one-chip microcomputer 103 operates the NIC 103 with a power source provided independently of the power source 109 of the local machine 1. In response to a status query received from the management server 7, the one-chip microcomputer 103 notifies the management server 7 of a stopped status when the power supply from the power source 109 to the NIC 103 is lost and notifies the management server 7 of an operating status when the power supply from the power source 109 is not lost.

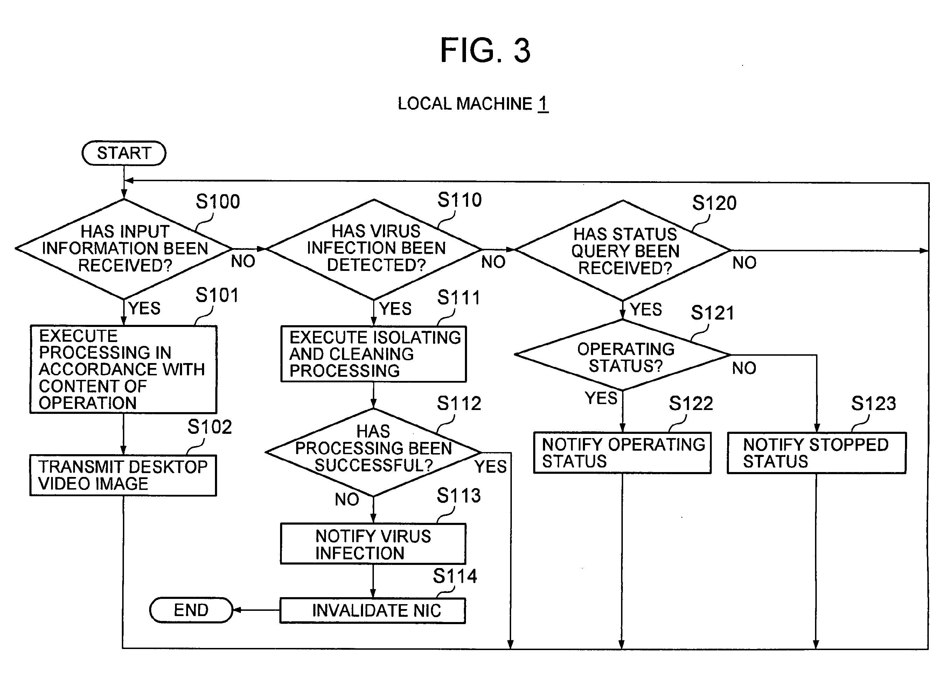

FIG. 3 is a diagram for explaining an operation of the local machine 1. The flow of FIG. 3 is essentially executed by the CPU 101 or the one-chip microcomputer 1031 in accordance with the programs. In this case, however, for simplification of the description, the flow will be described based on the programs for the processing of the CPU 101.

When the application program 1045 in an active status receives input information from the remote machine 2 through the NIC 103 (YES in Step S100), the application program 1045 executes a processing in accordance with the content of operation (a keyboard operation and a mouse operation) indicated by the input information (Step S101). Then, image information representing a desktop screen, on which the processing result is reflected, is generated by the video card 107 to be transmitted to the remote machine 2 through the NIC 103 (Step S102).

When the virus detection program 1044 detects a file infected with a virus in the RAM 102 and the HDD 104 (YES in Step S110), the virus detection program 1044 executes an isolating or cleaning processing on the detected file (Step S111). Then, when the isolation or the cleaning has failed (NO in Step S112), the virus detection program 1044 transmits a virus infection notification to the management server 7 through the NIC 103 (Step S113). Thereafter, the virus detection program 1044 stops the driver of the NIC 103 managed by the OS 1041 for disconnection from the LAN 4A (Step S114) .

Upon reception of a status query from the management server 7 through the NIC 103 (YES in Step S120), the one-chip microcomputer 1031 notifies the management server 7 of a stopped status (Step S123) when the power supply from the power source 109 to the NIC 103 is lost (NO in Step S121). On the other hand, when the power supply from the power source 109 to the NIC 103 is not lost (YES in Step S121), the one-chip microcomputer 1031 notifies the management server 7 of an operating status (Step S122).

Returning to FIG. 1, the description will be continued. The management server 7 manages assignment of the plurality of local machines to the respective remote machines 2.

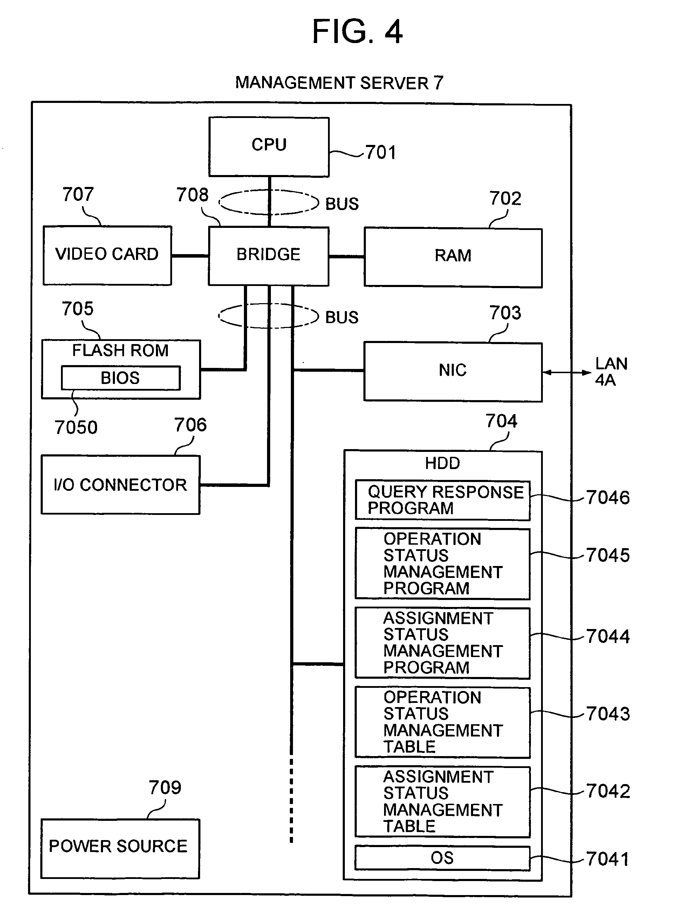

FIG. 4 is a schematic diagram of the management server 7. As illustrated, the management server 7 includes: a CPU 701; a RAM 702 which functions as a work area for the CPU 701; an NIC 703 which is used to connect to the LAN 4A; an HDD 704; a flash ROM 705; an I/O connector 706 which is used to connect to a keyboard and to a mouse; a video card 707 which is used to connect to a display; a bridge 708 which relays buses BUS which connect the components 701 to 707 to one another; and a power source 709.

The flash ROM 705 stores a BIOS 7050. After power-on of the power source 709, the CPU 701 first accesses the flash ROM 705 to execute the BIOS 7050, thereby recognizing a system configuration of the management server 7.

The HDD 704 stores at least an OS 7041, an assignment status management table 7042, an operation status management table 7043, an assignment status management program 7044, an operation status management program 7045, and a query response program 7046.

The OS 7041 is a program which allows the CPU 701 to integrally control the components 702 to 709 of the management server 7 to execute each of the programs 7042 to 7046 as described below. The CPU 701 loads the OS 7041 from the HDD 704 on the RAM 702 to execute the OS 7041 in accordance with the BIOS 7050. As a result, the CPU 701 integrally controls the components 702 to 709 of the management server 7.

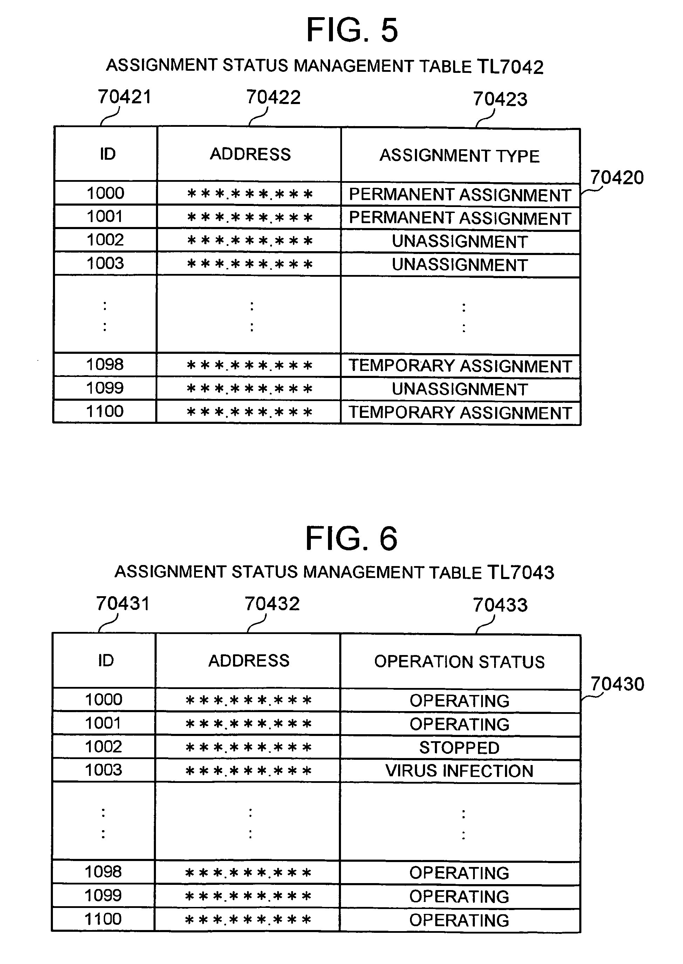

The assignment status management table 7042 stores assignment information of the local machine 1 for each of the local machines 1. FIG. 5 is a diagram schematically showing the assignment status management table 7042. As illustrated, a record 70420 is registered for each of the local machines 1. The record 70420 includes a field 70421 which is used to register an ID of the local machine 1, a field 70422 which is used to register a network address of the local machine 1, and a field 70423 which is used to register an assignment type of the local machine 1. The assignment types are classified into "permanent assignment", "temporary assignment", and "unassignment". The "permanent assignment" indicates a state where the remote machine 2 is permanently assigned. The "temporary assignment" indicates a state where the remote machine 2 is temporarily assigned when the local machine 1 "permanently assigned" to the remote machine 2 is stopped for maintenance or the like. The "unassignment" indicates a state where the remote machine 2 has not been assigned yet.

The operation status management table 7043 stores an operation status of the local machine 1 for each of the local machines 1. FIG. 6 is a diagram schematically showing the operation status management table 7043. As illustrated, a record 70430 is registered for each of the local machines 1. The record 70430 includes a field 70431 which is used to register an ID of the local machine 1, a field 70432 which is used to register a network address of the local machine 1, and a field 70433 which is used to register an operation status (any one of "operating", "stopped" and "virus infection") of the local machine 1.

The assignment status management program 7044 is a program which manages the local machine 1 to be assigned to the remote machine 2. The assignment status management program 7044 uses the assignment status management table 7042 and the operation status management table 7043 to determine the local machine 1 to be assigned to the remote machine 2, and updates the assignment status management table 7042 in accordance with the content of determination.

The operation status management program 7045 is a program which manages an operation status of the local machine 1. The operation status management program 7045 obtains an operation status from each of the local machines 1 to update the operation status management table 7043 in accordance with the obtained content.

The query response program 7046 is a program which responds to a query from the remote machine 2. In response to a status query or a recovery query from the remote machine 2, the query response program 704 6 obtains an operation status of the local machine 1 permanently assigned to the remote machine 2 to respond to the query, and updates the operation status management table 7043.

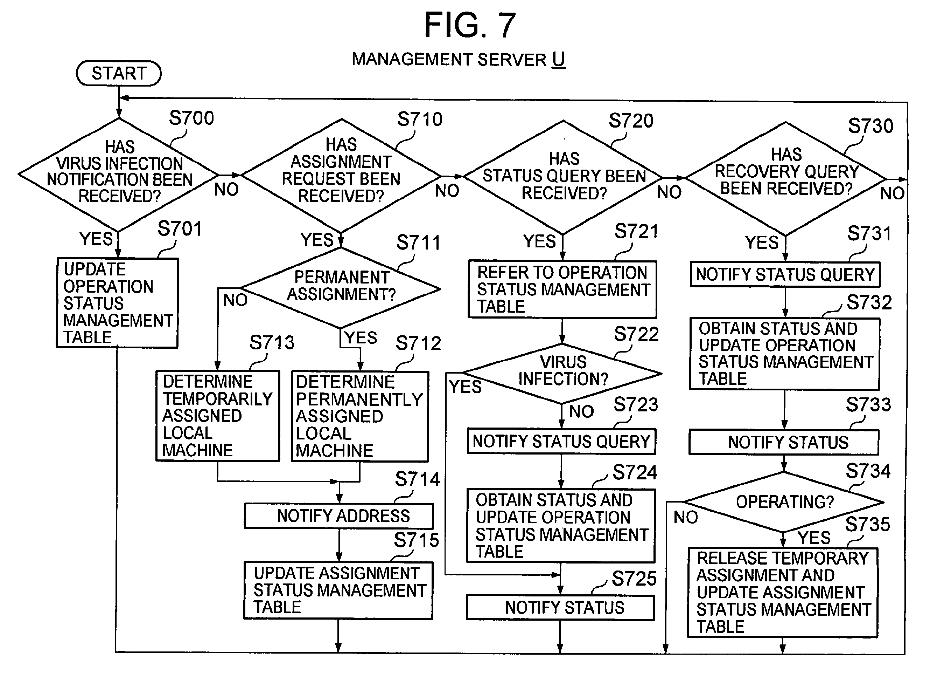

FIG. 7 is a diagram for explaining an operation of the management server 7. The flow is essentially executed by the CPU 701 in accordance with the programs. In this case, however, for simplification of the description, the flow will be described based on the programs.

Upon reception of a virus infection notification from the local machine 1 through the NIC 703 (YES in Step S700), the operation status management program 7045 searches the operation status management table 7043 for the record 70430 having the network address of the virus infection notification source. Then, the operation status registered in the field 70433 of the record 70430 found in the search is modified to "virus infection" (Step S701).

Upon reception of an assignment request from the remote machine 2 through the NIC 703 (YES in Step S710), if the assignment request is a permanent assignment request (YES in Step S711), the assignment status management program 7044 determines the local machine 1 to be permanently assigned to the remote machine 2 which has requested the assignment (Step S712). Specifically, the assignment status management program 7044 searches the assignment status management table 7042 for the record 70420 including the field 70423 registered with the assignment type "unassignment". Next, for each of the records 70420 found in the search, the assignment status management program 7044 searches the operation status management table 7043 for the record 70430 including the field 70431 registered with the ID registered in the field 70421 or the record 70430 including the field 70432 registered with the network address registered in the sub-field 70422 to examine whether or not the operation status registered in the field 70433 of the record 70430 is "operating". When the operation status is "operating", the target record is set as the record 70420 serving as a permanent assignment candidate. One record is selected from the thus set permanent assignment candidate records 70420 and is determined as the permanent assignment record 70420.

Next, the assignment status management program 7044 transmits the ID registered in the field 70421 and the network address registered in the field 70422 of the permanent assignment record 70420 to the remote machine 2 which has requested the assignment (StepS714). The assignment status management program 7044 also updates the assignment type of the field 70423 in the permanent assignment record 70420 registered in the assignment status management table 7042 from "unassignment" to "permanent assignment" (Step S715).

On the other hand, when the assignment request received from the remote machine 2 through the NIC 703 is a temporary assignment request (NO in Step S711), the assignment status management program 7044 determines the local machine 1 to be temporarily assigned to the remote machine 2 which has requested the assignment (Step S713). Specifically, the assignment status management program 7044 searches the assignment status management table 7042 for the record 70420 including the sub-field 70424 registered with the assignment type "unassignment". Next, for each of the records 70420 found in the search, the assignment status management program 7044 searches the operation status management table 7043 for the record 70430 including the field 70431 registered with the ID registered in the field 70421 or the record 70430 including the field 70432 registered with the network address registered in the sub-field 70422 to examine whether or not the operation registered in the field 70433 of the record 70430 is "operating". When the operation status is "operating", the target record 70420 is set as the temporary assignment candidate record 70420. One record is selected from the thus set temporary assignment candidate records 70420 and is determined as the temporary assignment record 70420.

Next, the assignment status management program 7044 transmits the ID registered in the field 70421 and the network address registered in the field 70422 of the temporary assignment record 70420 to the remote machine 2 which has requested the assignment (Step S714). The assignment status management program 7044 also updates the assignment type of the field 70423 in the temporary assignment record 70420 registered in the assignment status management table 7042 from "unassignment" to "temporary assignment" (Step S715).

Upon reception of a status query notification from the remote machine 2 through the NIC 703 (YES in Step S720), the query response program 7046 examines a status of the local machine 1 permanently assigned to the status query notification source (Step S721). Specifically, the query response program 7046 searches the operation status management table 7043 for the record 70430 including the field 70431 registered with the ID of the local machine 1 contained in the status query notification or the record 70430 including the field 70422 registered with the network address contained in the status query notification to obtain the operation status registered in the field 70433 of the record 70430.

Next, the query response program 7046 examines whether or not the operation status obtained in Step S721 is "virus infection" (Step S722). When the operation status is "virus infection" (YES in Step S722), the query response program 7046 generates a query response indicating the operation status is "virus infection" and transmits the thus generated query response to the remote machine 2, which has issued the status query, through the NIC 703 (Step S725). On the other hand, when the operation status is not "virus infection" (NO in Step S722), the query response program 7046 transmits a status query to the network address of the local machine 1 contained in the status query notification through the NIC 703 (Step S723). Then, the query response program 7046 obtains the operation status from the local machine 1 to update the field 70433 of the record 70430 found in the search in Step S721 with the obtained operation status (Step S724). The query response program 7046 also generates a query response indicating the operation status (one of "operating" and "stopped") obtained in Step S724 and transmits the thus generated query response to the remote machine 2, which has transmitted the status query, through the NIC 703 (Step S725).

Upon reception of a recovery query notification from the remote machine 2 through the NIC 703 (YES in Step S730), the query response program 7046 examines whether or not the local machine 1 permanently assigned to the recovery query notification source has recovered. Specifically, the query response program 7046 transmits a status query to the network address of the permanently assigned local machine 1 contained in the recovery query notification through the NIC 703 (Step S731). Then, upon reception of the operation status from the local machine 1, the query response program 7046 searches the operation status management table 7043 for the record 70430 including the field 70431 registered with the ID of the permanently assigned local machine 1 contained in the recovery query notification or the record 70430 including the field 70432 registered with the network address of the permanently assigned local machine 1 contained in the recovery query notification and updates the field 70433 of the record 70430 with the obtained operation status (Step S732). The query response program 7046 also generates a query response indicating the operation status (one of "operating" and "stopped") obtained in Step S732 and transmits the remote machine 2, which has transmitted the recovery query notification, through the NIC 703 (Step S733).

Next, when the operation status indicated by the query response transmitted to the remote machine 2 corresponding to the recovery query notification source is "operating" (YES in Step S734), the query response program 7046 releases the local machine 2 temporarily assigned to the remote machine 2 corresponding to the recovery query notification source (Step S735). Specifically, the query response program 7046 searches the assignment status management table 7042 for the record 70420 including the field 70421 registered with the ID of the temporarily assigned local machine 1 contained in the recovery query notification or the record 70420 including the field 70422 being registered with the network address of the temporarily assigned local machine 1 contained in the recovery query notification. Then, the query response program 7046 updates the assignment type registered in the field 70423 of the record 70420 found in the search from "temporary assignment" to "unassignment".

Returning to FIG. 1, the description will be continued. The remote machine 2 constructs the VPN with respect to the local machine 1. The remote machine 2 transmits input information (content of operation of the input device) input to the self remote machine 2 to the local machine 1 and receives image information (the desktop screen of the display device) from the local machine 1 to display the image information on the display of the self remote machine 2. The remote machine 2 also obtains the network address of the local machine 1 permanently assigned to the self remote machine 2 to register the obtained network address in the authentication device 6. When the network is disconnected from the local machine 1 permanently assigned to the self remote machine 2, the remote machine 2 obtains the network address of the local machine 1 temporarily assignedto the self remote machine 2 to register the obtained network address in the authentication device 6 as necessary. The remote machine 2 is a so-called HDD-less PC and is configured so that a printer, an external drive, an external memory and the like cannot be locally connected or cannot be connected through the network to the remote machine 2. Specifically, the remote machine 2 is configured to be able to use only a printer, an external drive, an external memory, and the like which are locally connected or connected through the network to the local machine 1. This reduces a fear that information leaks due to theft of the remote machine 2 and the like.

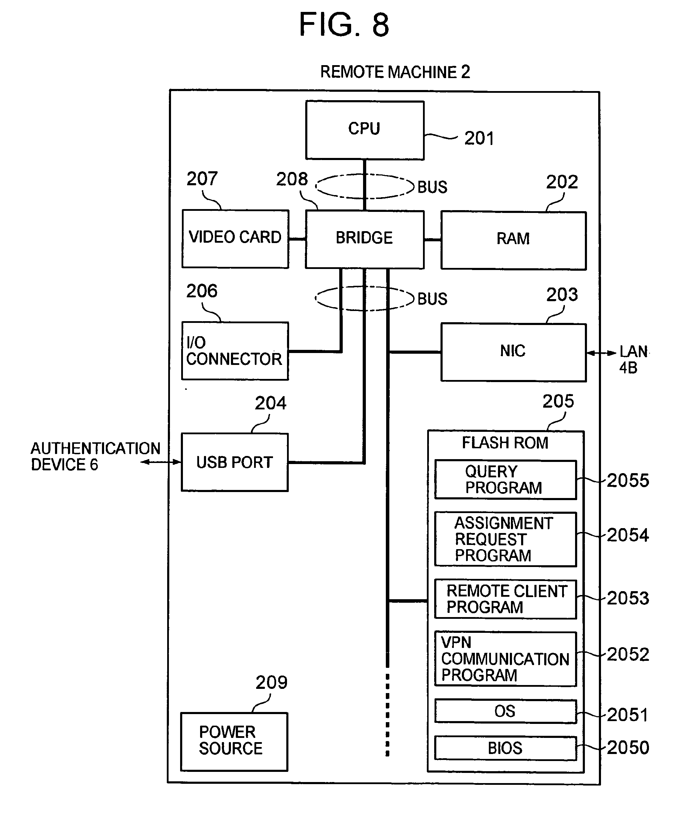

FIG. 8 is a schematic diagram of the remote machine 2. As illustrated, the remote machine 2 includes: a CPU 201; a RAM 202 which functions as a work area for the CPU 201; an NIC 203 which is used to connect to the LAN 4B; a USB port 204 which is used to connect to the authentication device (USB device) 6; a flash ROM 205; an I/O connector 206 which is used to connect to a keyboard and to a mouse; a video card 207 which is used to connect to a display; a bridge 208 which relays buses BUS which connect those components 201 to 207 with one another; and a power source 209.

The flash ROM 205 stores at least: a BIOS 2050; an OS 2051; a VPN communication program 2052; a remote client program 2053; an assignment request program 2054; and a query program 2055.

After power-on of the power source 209, the CPU 201 first accesses the flash ROM 205 to execute the BIOS 2050, thereby recognizing a system configuration of the remote machine 2.

The OS 2051 is a program which allows the CPU 201 to integrally control the components 202 to 209 of the remote machine 1 to execute each of the programs 2052 to 2055 as described below. The CPU 201 loads the OS 2051 from the flash ROM 205 on the RAM 202 to execute the OS 2051 in accordance with the BIOS 2050. As a result, the CPU 201 integrally controls the components 202 to 209 of the remote machine 2. As the OS 2051 in the present invention, a relatively small-sized OS which can be stored in the flash ROM 205 such as an embedded OS is used.

The VPN communication program 2052 is a communication program which constructs the VPN with respect to the local machine 1 having the address notified from the remote client program 2053, for example, is a communication program using an IPsec. The CPU 201 loads the VPN communication program 2052 from the flash ROM 205 on the RAM 202 to execute the VPN communication program 2052 in accordance with the OS 2051. As a result, the CPU 201 transmits a communication start request to the local machine 1 permanently assigned or temporarily assigned to the self remote machine 2 through the NIC 203 to construct the VPN with respect to the local machine 1 so as to perform communications with the local machine 1 through the VPN.

The remote client program 2053 is a program which allows the remote machine 2 to remotely access the desktop of the local machine 1, for example, a client (viewer) program of the VNC. The CPU 201 loads the remote client program 2053 from the flash ROM 205 on the RAM 202 to execute the remote client program 2053 in accordance with the OS 2051. As a result, the CPU 201 transmits input information of the I/O connector 206 (content of operation of the keyboard and the mouse) to the local machine 1 through the VPN and outputs image information (the desktop screen of the display) transmitted from the local machine 1 through the VPN to a display (not shown) connected to the video card 207.

The remote client program 2053 causes the CPU 201 to perform the following authentication processing prior to the execution of the above-described processing. Specifically, the CPU 201 causes the display connected to the video card 207 to display an entry form of a user ID and a password to accept the entry of the user ID and the password by a user through the keyboard and the mouse connected to the I/O connector 206. Then, the remote client program 2053 transmits the accepted user ID and password to the authentication device 6 connected to the USB port 204 to request user authentication. Then, only when the user is successfully authenticated, the remote client program 2053 receives the address of the local machine 1 from the authentication device 6 to notify the VPN communication program 2052 of the received address.

The assignment request program 2054 serves to register the address of the local machine 1 permanently assigned to the self remote machine 2 or the address of the local machine 1 temporarily assigned to the self remote machine 2 or to delete the address of the local machine 1 temporarily assigned to the self remote machine 2, which is registered in the authentication device 6, in accordance with an instruction of the remote client program 2053. The query program 2055 serves to make a query of an operation status of the local machine 1 permanently assigned to the self remote machine 2 in accordance with an instruction of the remote client program 2053.

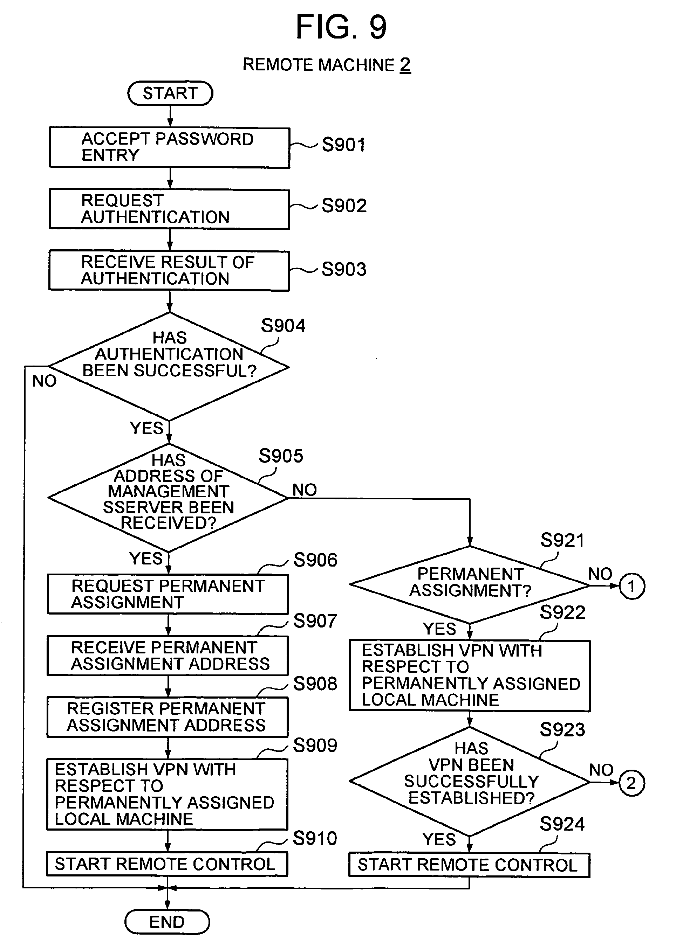

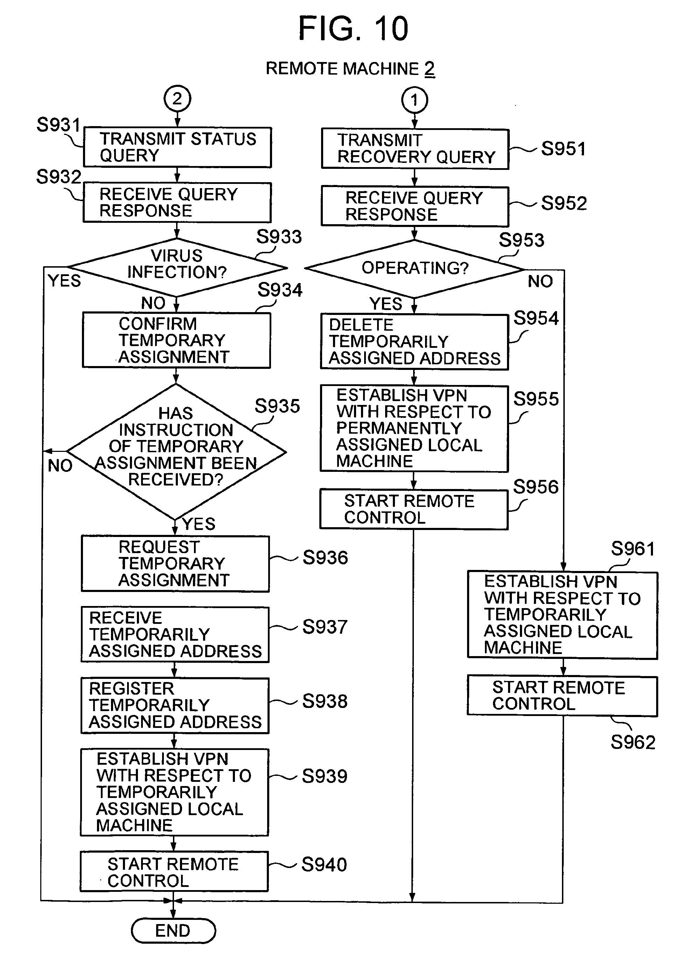

FIGS. 9 and 10 are diagrams for explaining an operation of the remote machine 2. The flow in FIGS. 9 and 10 is essentially executed by the CPU 201 in accordance with the programs. In this case, however, for simplification of the description, the flowwill be described based on the programs.

The remote client program 2053 causes the display connected to the video card 207 to display the entry form of the user ID and the password to accept the entry of the user ID and the password by the user through the keyboard and the mouse connected to the I/O connector 206 (Step S901). Then, the remote client program 2053 transmits the accepted user ID and password to the authentication device 6 connected to the USB port 204 to request the authentication (Step S902) and then receives the result of authentication from the authentication device 6 (Step S903).

When the result of authentication indicates that the authentication has failed (NO in Step S903), the flow is terminated. On the other hand, when the result of authentication indicates that the authentication has been successful (YES in Step S903), the remote client program 2053 examines whether or not the address received together with the result of authentication from the authentication device 6 is the address of the management server 7 (Step S905). When the address of the management server 7 is received from the authentication device 6 (YES in Step S905), the authentication device 6 has not been used yet for permanent assignment of the local machine 1 to the remote machine 2. Specifically, the authentication device 6 is not used for the remote control of the local machine 1 by the remote machine 2. In this case, the remote client program 2053 notifies the assignment request program 2054 of the address of the management server 7 to instruct the assignment request program 2054 to permanently assign the local machine 1.

In response to the instruction, the assignment request program 2054 transmits a permanent assignment request to the management server 7 through the NIC 203 (Step S906). Next, when the assignment request program 2054 receives the address of the local machine 1 permanently assigned to the self remote machine 2 from the management server 7 through the NIC 203 (Step S907), the assignment request program 2054 transmits the address of the local machine 1 permanently assigned to the self remote machine 2 to the authentication device 6 through the USB port 204 to register the transmitted address in the authentication device 6 and to notify the remote client program 2053 of the transmitted address (Step S908). The remote client program 2053 notifies the VPN communication program 2052 of the address of the local machine 1 permanently assigned to the self remote machine 2, which is notified from the assignment request program 2054, to instruct the VPN communication program 2052 to establish the VPN.

In response to the instruction, the VPN communication program 2052 establishes the VPN with the local machine 1 permanently assigned to the self remote machine 2 (Step S909). The remote client program 2053 cooperates with the remote server program 1043 of the local machine 1 permanently assigned to the self remote machine 2 to start remote control of the local machine 1 permanently assigned to the self remote machine 2 through the VPN (Step S910).

On the other hand, when the address received with the result of authentication from the authentication device 6 is not the address of the management server 7 (NO in Step S905), the address is the address of the local machine 1. Therefore, the remote client program 2053 examines that the address is the address of the local machine 1 permanently assigned to the self remote machine 2 or the address of the local machine 1 temporarily assigned to the self remote machine 2 (Step S921). When the address is the address of the local machine 1 permanently assigned to the self remote machine 2 (YES in Step S921), the remote client program 2053 notifies the VPN communication program 2052 of the address of the local machine 1 permanently assigned to the self remote machine 2 to instruct the VPN communication program 2052 to establish the VPN.

In response to the instruction, the VPN communication program 2052 establishes the VPN with the local machine 1 permanently assigned to the self remote machine 2 (Step S922). When the VPN has been successfully established (YES in Step S923), the remote client program 2053 cooperates with the remote server program 1043 of the local machine 1 permanently assigned to the self remote machine 2 to start remote control of the local machine 1 permanently assigned to the self remote machine 2 through the VPN (Step S924).

In Step S922, when the VPN communication program 2052 has failed in the establishment of the VPN (Step S923), the remote client program 2053 obtains the address of the management server 7 from the authentication device 6. Then, the remote client program 2053 notifies the query program 2055 of the address of the management server 7 and the network address of the permanently assigned local machine 1 to instruct a status query. In response to the status query, the query program 2055 generates a status query containing the network address of the permanently assigned local machine 1 and transmits the thus generated status query to the management server 7 through the NIC 203 (Step S931).

Next, upon reception of the query response from the management server 7 (Step S932), the query program 2055 notifies the remote client program 2053 of an operation status contained in the query response. In response to the notification of the operation status, the remote client program 2053 examines that the operation status received from the queryprogram 2055 is "virus infection" or "stopped" (Step S933). If the operation status is "virus infection" (YES in Step S933), the flow is terminated. On the other hand, if the operation status is "stopped" (NO in Step S933), the remote client program 2053 causes the display connected to the video card 207 to display a confirmation screen for confirming whether or not to temporarily assign the local machine 1 so as to accept an instruction whether or not to perform the temporary assignment from the user through the keyboard and the mouse connected to the I/O connector 206 (Step S934). When the instruction indicating that the temporary assignment is not to be performed (NO in Step S935), the flow is terminated. On the other hand, when the instruction indicating that the temporary assignment is to be performed (YES in Step S935), the remote client program 2053 obtains the address of the management server 7 from the authentication device 6. Then, the remote client program 2053 notifies the assignment request program 2054 of the address of the management server 7 to instruct the temporary assignment of the local machine 1.

In response to the instruction, the assignment request program 2054 transmits a temporary assignment request to the management server 7 through the NIC 203 (Step S936). Next, when the assignment request program 2054 receives the address of the local machine 1 temporarily assigned to the self remote machine 2 from the management server 7 through the NIC 203 (Step S937), the assignment request program 2054 transmits the address of the local machine 1 temporarily assigned to the self remote machine 2 to the authentication device 6 through the USB port 204 to register the transmitted address in the authentication device 6 and to notify the remote client program 2053 of the transmitted address (Step S938). The remote client program 2053 notifies the VPN communication program 2052 of the address of the local machine 1 temporarily assigned to the self remote machine 2, which is notified from the assignment request program 2054, to instruct the VPN communication program 2052 to establish the VPN.

In response to the instruction, the VPN communication program 2052 establishes the VPN with the local machine 1 temporarily assigned to the self remote machine 2 (Step S939). The remote client program 2053 cooperates with the remote server program 1043 of the local machine 1 temporarily assigned to the self remote machine 2 to start remote control of the local machine 1 temporarily assigned to the self remote machine 2 through the VPN (Step S940).

In Step S921, when the address received together with the result of authentication from the authentication device 6 is the address of the local machine 1 temporarily assigned to the self remote machine 2 (NO in Step S921), the remote client program 2053 obtains the address of the management server 7 and the network address of the permanently assigned local machine 1 from the authentication device 6. Then, the remote client program 2053 notifies the query program 2055 of the address of the management server 7 and the network address of the permanently assigned local machine 1 to instruct the query program 2055 to instruct a recovery query. In response to the instruction, the query program 2055 generates a recovery query containing the address of the temporarily assigned local machine 1 and the network address of the permanently assigned local machine 1 and transmits the thus generated recovery query to the management server 7 through the NIC 203 (Step S951).

Next, upon reception of a query response from the management server 7 (Step S952), the query program 2055 notifies the remote client program 2053 of an operation status contained in the query response. In response to the notification of the operation status, the remote client program 2053 examines that the operation status received from the queryprogram 2055 is "operating" or "stopped" (Step S953). When the operation status is "operating" (YES in Step S953), the remote client program 2053 deletes the address of the local machine 1 temporarily assigned to the self remote machine 2 from the authentication device 6 (Step S954) . Then, the remote client program 2053 notifies the VPN communication program 2052 of the address of the local machine 1 permanently assigned to the self remote machine 2 to instruct the VPN communication program 2052 to establish the VPN.

In response to the instruction, the VPN communication program 2052 establishes the VPN with the local machine 1 permanently assigned to the self remote machine 2 (Step S955). The remote client program 2053 cooperates with the remote server program 1043 of the local machine 1 permanently assigned to the self remote machine 2 to start remote control of the local machine 1 permanently assigned to the self remote machine 2 through the VPN (Step S956).

On the other hand, in Step S953, when the operation status received from the query program 2055 is "stopped" (NO in Step S953), the remote client program 2053 notifies the VPN communication program 2052 of the address of the local machine 1 temporarily assigned to the self remote machine 2 to instruct the VPN communication program 2052 to establish the VPN.

In response to the instruction, the VPN communication program 2052 establishes the VPN with the local machine 1 temporarily assigned to the self remote machine 2 (StepS961) . The remote client program 2053 cooperates with the remote server program 1043 of the local machine 1 temporarily assigned to the self remote machine 2 to start remote control of the local machine 1 temporarily assigned to the self remote machine 2 through the VPN (Step S962).

In the flow shown in FIGS. 9 and 10, as information which specifies the local machine 1, the ID of the local machine 1 may be used in place of or in addition to the network address.

Returning to FIG. 1, the description will be continued. The authentication device 6 authenticates the user ID and the password received from the remote machine 2 and then notifies the remote machine 2 of the result of authentication. When the result of authentication has been successful, the authentication device 6 notifies the remote machine 2 of the result of authentication together with the address registered in the authentication device 6 with a flag which identifies that the address is the address of the management server 7, the address of the permanently assigned local machine 1, or the address of the temporarily assigned local machine 1. The authentication device 6 also registers and deletes the address of the local machine 1 in accordance with an instruction from the remote machine 2 that has been successfully authenticated.

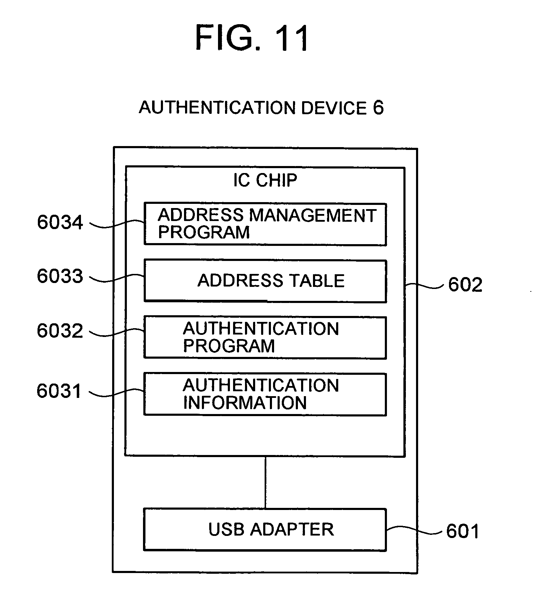

FIG. 11 is a schematic diagram of the authentication device 6. As illustrated, the authentication device 6 includes: a USB adapter 601 to be connected to the USB port 204 of the remote machine 2; and an IC chip 602.

The IC chip 602 stores authentication information 6031, an authentication program 6032, an address table 6033, and an address management program 6034. The authentication device 6 may be configured so that a flash memory can be externally attached thereto to store a part of the data stored in the IC chip 602.

The authentication information 6031 includes the ID and the password of the user.

The authentication program 6032 serves to authenticate the user by using the ID and the password of the user, which are input to the remote machine 2 connected to the self authentication device 6, and the authentication information 6031.

The address table 6033 includes: a management server entry which registers the address of the management server 7; a permanent assignment entry which registers the address of the local machine 1 permanently assigned to the remote machine 2, to which the self authentication device 6 is connected; and a temporary assignment entry which registers the address of the local machine 1 temporarily assigned to the remote machine 2. In the initial status, only the management server entry is registered with the address of the management server 7, whereas the other entries have null data. In the permanent assignment entry and the temporary assignment entry, the ID of the local machine 1 may be registered with the network addresses of the permanently assigned and temporarily assigned local machines 1.

In accordance with the instruction of the remote machine 2 to which the self authentication device 6 is connected, the address management program 6034 registers the address of the local machine 1 permanently assigned to the remote machine 2 in the permanent assignment entry in the address table 6033. The address management program 6034 also registers the address of the local machine 1 temporarily assigned to the remote machine 2 in the temporary assignment entry in the address table 6033 or deletes the address of the local machine 1, which is released from the temporary assignment to the remote machine 2, from the entry.

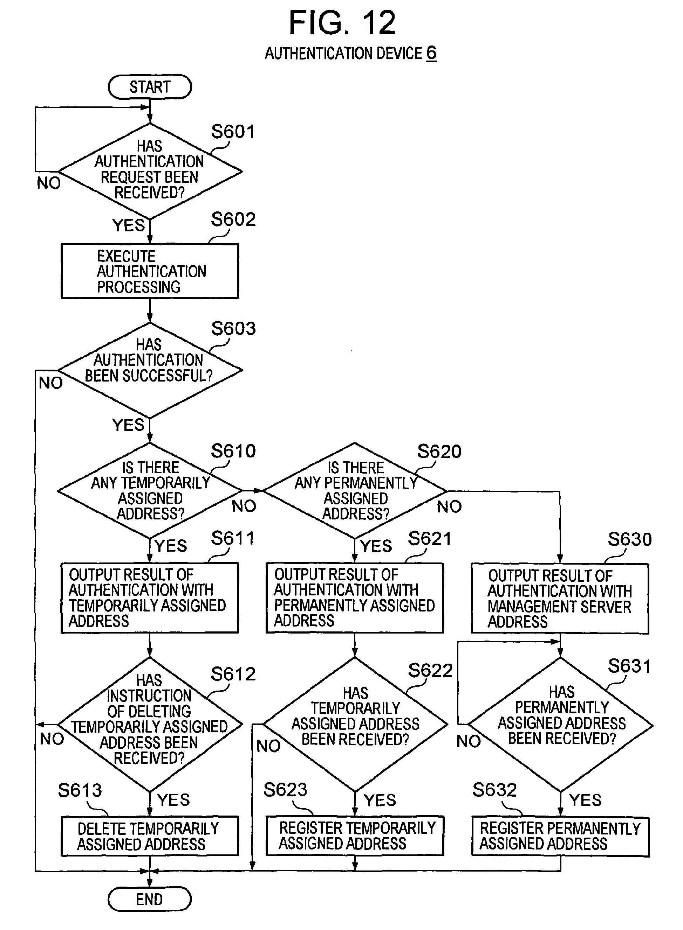

The USB adapter 601 of the authentication device 6 is connected to the USB port 204 of the remote machine 2. As a result, when the power is supplied from the remote machine 2 to the authentication device 6, the IC chip 602 executes the authentication program 6032 and the address management program 6034. FIG. 12 is a diagram for explaining an operation of the authentication device 6. The flow is essentially executed by the IC chip 602 in accordance with the programs. In this case, however, for the simplification of the description, the flow will be described based on the programs.

First, upon reception of an authentication request from the remote machine 2 (Step S601), the authentication program 6032 compares the user ID and the password contained in the authentication request with the user ID and the password in the authentication information 6031 (Step S602). When they are not identical with each other (NO in Step S603), the authentication program 6032 outputs the result of authentication indicating that the authentication has failed to the remote machine 2 to terminate the flow. On the other hand, when they are identical with each other (YES in Step S603), the authentication program 6032 refers to the address table 6033 to examine whether or not the address is registered in the temporary assignment entry (Step S610). When the address is registered in the temporary assignment entry (YES in Step S610), the authentication program 6032 outputs the result of authentication indicating that the authentication has been successful with the address of the temporarily assigned local machine 1 registered in the temporary assignment entry and a flag indicating the temporary assignment to the remote machine 2 (Step S611). Thereafter, when receiving an instruction of deleting the address of the temporarily assigned local machine 1 from the remote machine 2 within a predetermined time (YES in Step S612), the authentication program 6032 notifies the address management program 6034 of the reception of the instruction. In response to the notification, the address management program 6034 deletes the address from the temporary assignment entry in the address table 6033 (Step S613). Thereafter, the flow is terminated. When the address management program 6034 does not receive the instruction of deleting the address of the temporarily assigned local machine 1 from the remote machine 2 within the predetermined time (NO in Step S612), the flow is immediately terminated.

On the other hand, in Step S610, when the address is not registered in the temporary assignment entry (NO in Step S610), the authentication program 6032 refers to the address table 6033 to further examine whether or not the address has been registered in the permanent assignment entry (Step S620). When the address is registered in the permanent assignment entry (YES in Step S620), the authentication program 6032 outputs the result of authentication indicating that the authentication has been successful together with the address of the permanently assigned local machine 1 registered in the permanent assignment entry and a flag indicating the permanent assignment to the remote machine 2 (Step S621). Thereafter, when receiving the address of the temporarily assigned local machine 1 from the remote machine 2 within a predetermined time (YES in Step S622), the authentication program 6032 notifies the address management program 6034 of the received address. In response to the notification, the address management program 6034 registers the address received from the authentication program 6032 in the temporary assignment entry in the address table 6033 (Step S623). Thereafter, the flow is terminated. When the address of the temporarily assigned local machine 1 is not received from the remote machine 2 within the predetermined time (NO in Step S622), the flow is immediately terminated.

In Step S620, when the address has not been registered in the temporary assignment entry (NO in Step S620), the authentication program 6032 outputs the result of authentication indicating that the authentication has been successful with the address registered in the management server entry in the address table 6033 to the remote machine 2 (Step S630). Thereafter, the authentication program 6032 waits for the reception of the address of the permanently assigned local machine 1 from the remote machine 2 (Step S631) and then notifies the address management program 6034 of the received address. In response to the notification, the address management program 6034 registers the address received from the authentication program 6032 in the permanent assignment entry in the address table 6033 (Step S632). Thereafter, the flow is terminated.

For the flow shown in FIG. 12, instead of storing the authentication program 6032 and the address management program 6034 on the authentication device 6, these programs may be stored on the remote machine 2 to be performed by the remote machine 2. Alternatively, a part of the authentication program 6032 and the address management program 6034 may be stored on the remote machine 2 for execution so that the remote machine 2 and the authentication device 6 cooperate with each other to perform the programs.

Next, a schematic operation of the remote desktop system having the above-described configuration will be described.

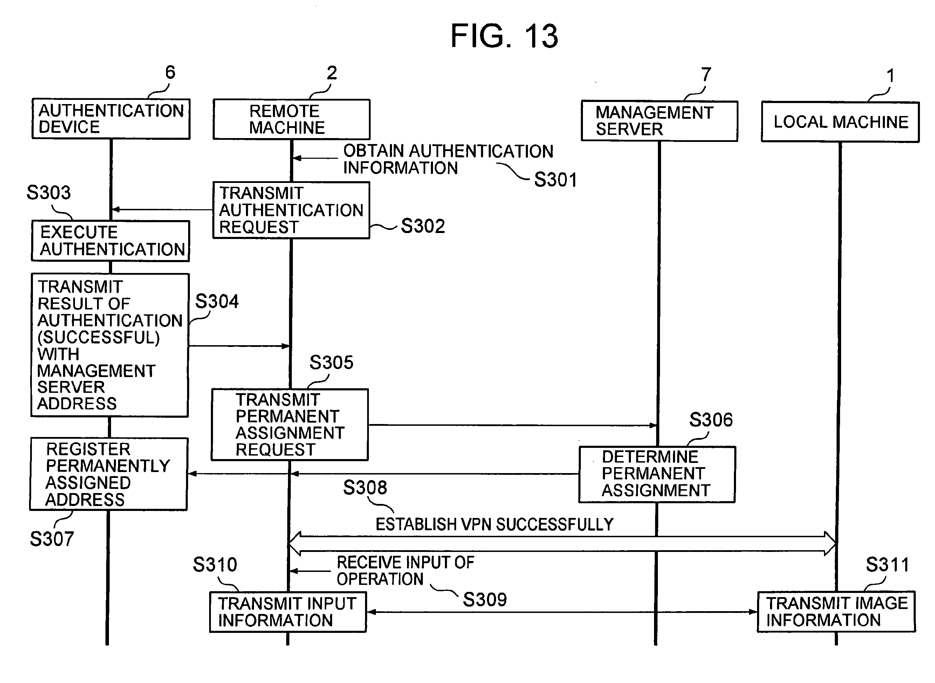

FIG. 13 is a diagram showing an example of operation in the case where the address of the local machine 1 permanently assigned to the remote machine 2, to which the authentication device 6 is connected, is not registered in the authentication device 6.

Upon input of the authentication information (the user ID and the password) by the user (Step S301), the remote machine 2 generates an authentication request containing the authentication information and transmits the thus generated authentication request to the authentication device 6 (Step S302).

Upon reception of the authentication request from the remote machine 2, the authentication device 6 uses the authentication information 6031 registered in the authentication device 6 to authenticate the user (Step S303) . Then, when the authentication is successful, the authentication device 6 transmits the result of authentication indicating that the authentication has been successful together with the address of the management server 7, which is registered in the address table 6033, to the remote machine 2 (Step S304).

Upon reception of the result of authentication indicating that the authentication has been successful together with the address of the management server 7 from the authentication device 6, the remote machine 2 transmits a permanent assignment request to the management server 7 (Step S305).

Upon reception of the permanent assignment request from the remote machine 2, the management server 7 determines the local machine 1 to be permanently assigned to the remote machine 2 that has issued the permanent assignment request and then transmits the address of the local machine 1 to the remote machine 2 that has requested the permanent assignment (Step S306).

Upon reception of the address of the local machine 1 permanently assigned to the self remote machine 2 from the management server 7, the remote machine 2 registers the received address in the address table 6033 of the authentication device 6 (Step S307). The remote machine 2 also establishes the VPN with the local machine 1 permanently assigned to the self remote machine 2 (Step S308). Then, the remote machine 2 uses the VPN to start remote control of the local machine 1 permanently assigned to the self remote machine 2. As a result, upon input of a user operation to the input device of the remote machine 2 (Step S309), input information indicating the content of operation is transmitted to the local machine 1 permanently assigned to the self remote machine 2 (Step S310). Image information of a desktop screen, on which the user's input information is reflected, is transmitted from the local machine 1 permanently assigned to the self remote machine 2 to the self remote machine 2 (Step S311).

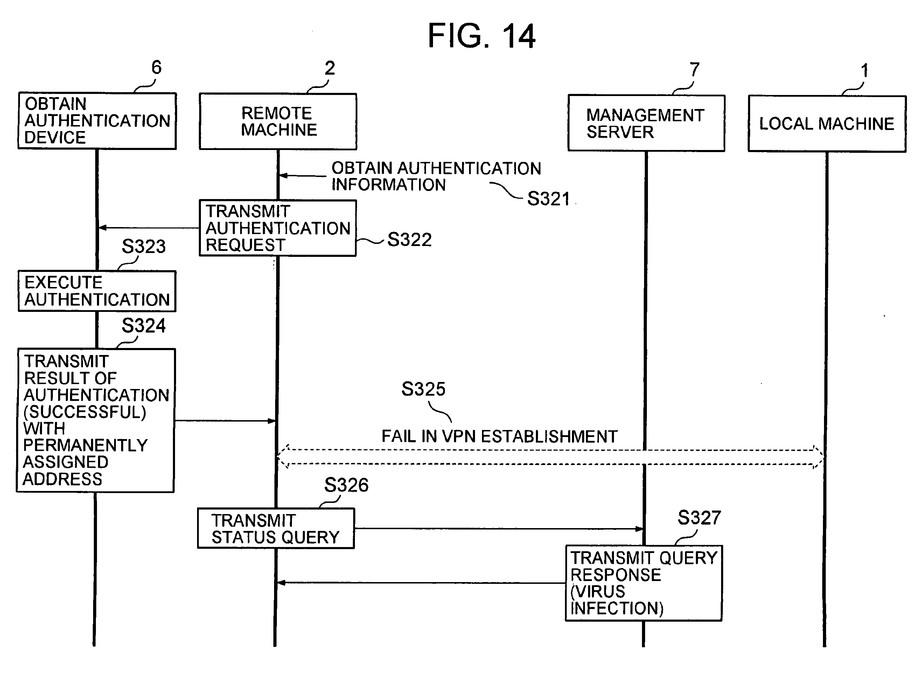

FIG. 14 is a diagram showing an example of operation when the permanently assigned local machine 1 is disconnected from the network for the virus infection in the case where the address of the local machine 1 permanently assigned to the remote machine 2, to which the authentication device 6 is connected, is registered in the authentication device 6 and the address of the local machine 1 temporarily assigned to the remote machine 2 is not registered in the authentication device 6.

Upon input of the authentication information (the user ID and the password) by the user (Step S321), the remote machine 2 generates an authentication request containing the authentication information and transmits the thus generated authentication request to the authentication device 6 (Step S322).

Upon reception of the authentication request from the remote machine 2, the authentication device 6 uses the authentication information 6031 registered in the authentication device 6 to authenticate the user (Step S323) . Then, when the authentication is successful, the authentication device 6 transmits the result of authentication indicating that the authentication has been successful together with the address of the permanently assigned local machine 1, which is registered in the address table 6033, to the remote machine 2 (Step S324).

Upon reception of the result of authentication indicating that the authentication has been successful from the authentication device 6 together with the address of the local machine 1 permanently assigned to the self remote machine 2, the remote machine 2 tries to establish the VPN with the permanently assigned local machine 1. In this case, however, since the permanently assigned local machine 1 is disconnected from the network, the establishment of the VPN fails (Step S325). Therefore, the remote machine 2 obtains the address of the management server 7 from the authentication device 6 and transmits a status query containing the address of the permanently assigned local machine 1 to the management server 7 (Step S326).

Upon reception of the status query from the remote machine 2, the management server 7 generates a query response containing the operation status "virus infection" of the permanently assigned local machine 1 having the address contained in the status query. Then, the management server 7 transmits the query response to the remote machine 2 that has issued the status query (Step S327).

The remote machine 2 displays the query response containing the operation status "virus infection" received from the management server 7.

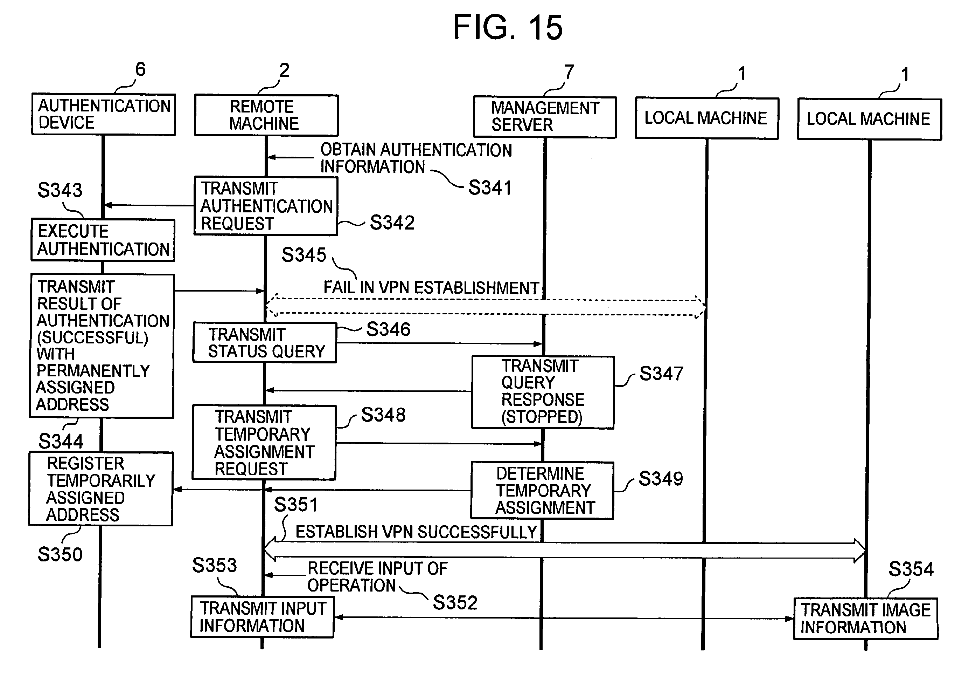

FIG. 15 is a diagram showing an example of operation when the permanently assigned local machine 1 is stopped in the case where the address of the local machine 1 permanently assigned to the remote machine 2, to which the authentication device 6 is connected, is registered in the authentication device 6 and the address of the local machine 1 temporarily assigned to the remote machine 2 is not registered in the authentication device 6.

Upon input of the authentication information (the user ID and the password) by the user (Step S341), the remote machine 2 generates an authentication request containing the authentication information and transmits the thus generated authentication request to the authentication device 6 (Step S342).

Upon reception of the authentication request from the remote machine 2, the authentication device 6 uses the authentication information 6031 registered in the authentication device 6 to authenticate the user (Step S343) . Then, when the authentication is successful, the authentication device 6 transmits the result of authentication indicating that the authentication has been successful together with the address of the permanently assigned local machine 1, which is registered in the address table 6033, to the remote machine 2 (Step S344).

Upon reception of the result of authentication indicating that the authentication has been successful from the authentication device 6 together with the address of the local machine 1 permanently assigned to the self remote machine 2, the remote machine 2 tries to establish the VPN with the permanently assigned local machine 1. In this case, however, since the permanently assigned local machine 1 is stopped, the establishment of the VPN fails (Step S345). Therefore, the remote machine 2 obtains the address of the management server 7 from the authentication device 6 and transmits a status query containing the ID accepted in Step S341 to the management server 7 (Step S346).

Upon reception of the status query from the remote machine 2, the management server 7 generates a query response containing the operation status "stopped" of the permanently assigned local machine 1 having the address contained in the status query. Then, the management server 7 transmits the query response to the remote machine 2 that has issued the status query (Step S347).

The remote machine 2 displays the query response containing the operation status "stopped", which is received from the management server 7, so as to request the user to confirm whether or not to perform the temporary assignment of the local machine 1. Then, when the local machine 1 is to be temporarily assigned, the remote machine 2 transmits a temporary assignment request containing the user ID accepted in Step S341 to the management server 7 (Step S348).

Upon reception of the temporary assignment request from the remote machine 2, the management server 7 determines the local machine 1 to be temporarily assigned. Then, the management server 7 transmits the address of the local machine 1 to the remote machine 2 that has issued the temporary assignment request (Step S349).

Upon reception of the address of the local machine 1 temporarily assigned to the self remote machine 2 from the management server 7, the remote machine 2 registers the received address in the address table 6033 of the authentication device 6 (Step S350). The remote machine 2 also establishes the VPN with the local machine 1 temporarily assigned to the self remote machine 2 (Step S351). Then, the remote machine 2 uses the VPN to start remote control of the local machine 1 temporarily assigned to the self remote machine 2. As a result, upon input of a user operation to the input device of the remote machine 2 (Step S352), input information indicating the content of operation is transmitted to the local machine 1 temporarily assigned to the self remote machine 2 (Step S353). Image information of a desktop screen, on which the user's input information is reflected, is transmitted from the local machine 1 temporarily assigned to the self remote machine 2 to the self remote machine 2 (Step S354).

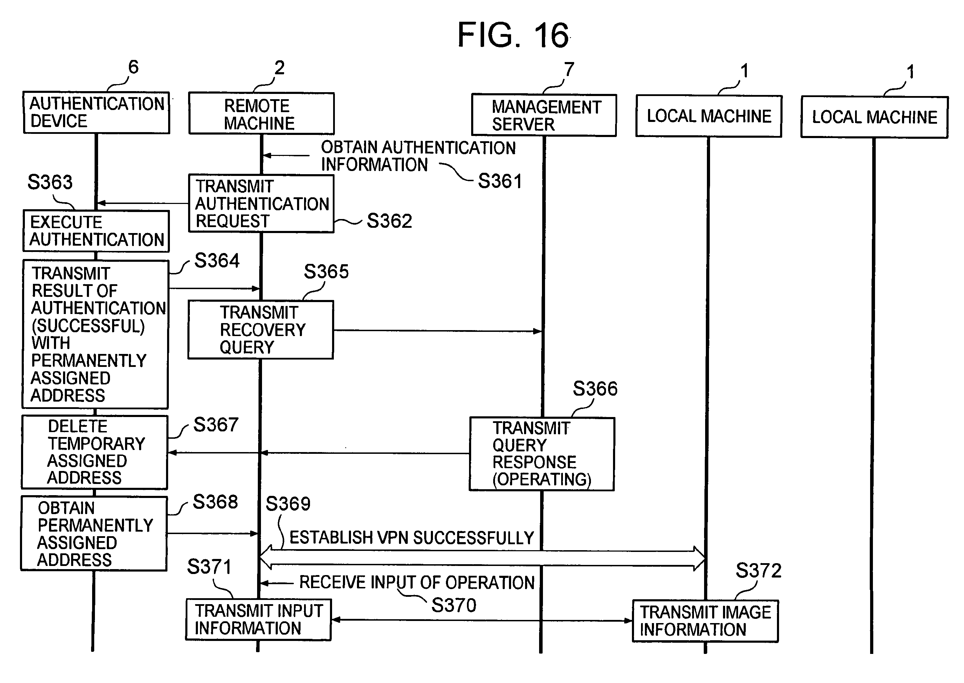

FIG. 16 is a diagram showing an example of operation when the local machine 1 permanently assigned to the remote machine 2 has recovered in the case where the address of the local machine 1 temporarily assigned to the remote machine 2, to which the authentication device 6 is connected, is registered in the authentication device 6.

Upon input of the authentication information (the ID and the password) by the user (Step S361), the remote machine 2 generates an authentication request containing the authentication information and transmits the thus generated authentication request to the authentication device 6 (Step S362).

Upon reception of the authentication request from the remote machine 2, the authentication device 6 uses the authentication information 6031 registered in the authentication device 6 to authenticate the user (Step S363) . Then, when the authentication is successful, the authentication device 6 transmits the result of authentication indicating that the authentication has been successful together with the address of the temporarily assigned local machine 1, which is registered in the address table 6033, to the remote machine 2 (Step S364).

Upon reception of the result of authentication indicating the authentication has been successful together with the address of the local machine 1 temporarily assigned to the self remote machine 2 from the authentication device 6, the remote machine 2 obtains the address of the management server 7 and the address of the permanently assigned local machine 1 from the authentication device 6 and transmits a recovery query containing the address of the temporarily assigned local machine 1 and the address of the permanently assigned local machine 1 to the management server 7 (Step S365).

Upon reception of the recovery query from the remote machine 2, the management server 7 generates a query response containing the operation status "operating" of the permanently assigned local machine 1 contained in the query. Then, the management server 7 transmits the query response to the remote machine 2 that has issued the recovery query (Step S366).

The remote machine 2 displays the query response containing the operation status "operating" received from the management server 7 and deletes the address of the local machine 1 temporarily assigned to the self remote machine 2 from the authentication device 6 (Step S367). The remote machine 2 also obtains the address of the local machine 1 permanently assigned to the self remote machine 2 from the authentication device 6 (Step S368) to establish the VPN with the local machine 1 permanently assigned to the self remote machine 2 (Step S369). Then, the remote machine 2 uses the VPN to start remote control of the local machine 1 permanently assigned to the self remote machine 2. As a result, upon input of a user operation to the input device of the remote machine 2 (Step S370), the input information indicating the content of operation is transmitted to the local machine 1 permanently assigned to the self remote machine 2 (Step S371) and transmits image information of a desktop screen, on which the input information of the user is reflected, from the local machine 1 permanently assigned to the self remote machine 2 to the self remote machine 2 (Step S372).

The embodiment of the present invention has been described above.

In this embodiment, for the first use of the authentication device 6, a query of the address of the local machine 1 permanently assigned to the remote machine 2, to which the authentication device 6 is connected, is made to the management server 7. In response to the query, the management server 7 determines the local machine 1 to be permanently assigned to the remote machine 2. Therefore, the resources (local machine 1) can be effectively used.

Moreover, in this embodiment, when the local machine 1 detects virus infection, the local machine 1 is disconnected from the network after notifying the management server 7 of the virus infection. Therefore, the access to the management server 7 allows the remote machine 2 to know the status of the local machine 1 permanently assigned to the self remote machine 2.

Furthermore, in this embodiment, when the local machine 1 permanently assigned to the remote machine 2 is stopped for the reasons other than virus infection, another local machine 1 can be temporarily assigned to the remote machine 2 as needed. Therefore, system availability can be improved while effectively preventing secondary virus infection.

The embodiment of the present invention is not limited to the above-described embodiment, and therefore, various variations are possible within the scope of the present invention. For example, in the above-described embodiment, the interface between the authentication device 6 and the remote machine 2 is not limited to the USB. Moreover, any authentication device can be used as the authentication device 6 as long as it is configured to be communicable with the remote machine 2. For example, an authentication device such as a PC card, which is configured to be attachable to and removable from the remote machine 2, may be used. Alternatively, an authentication device that uses near field communication such as Bluetooth (registered trademark) to enable communication without being attached to the remote machine 2 may also be used.

Furthermore, although the case where the VPN is constructed between the local machine 1 and the remote machine 2 to perform communication has been described in the above-described embodiment, the present invention is not limited thereto. For example, when the local machine 1 and the remote machine 2 are present in the same LAN, the local machine 1 and the remote machine 2 can perform communication without constructing the VPN.

## Claims

1. An information processing system, comprising:
a plurality of information processing devices;
a management server which manages the information processing devices; and
a plurality of terminals,
the plurality of information processing devices, the management server and the plurality of terminals being connected to each other through a network,
the management server comprises:
assignment status storage means which stores a terminal assignment status of each of the plurality of information processing devices; and
assignment management means which notifies, in response to an assignment request, the terminal that has transmitted the assignment request of an address of the information processing device whose terminal assignment status stored in the assignment status storage means is an unassigned status and updates the terminal assignment status of the information processing device stored in the assignment status storage means from the unassigned status to a status indicating that the information processing device is to be assigned to the terminal that has transmitted the assignment request,
the terminal comprises:
address storage means which stores at least an address of the management server;
assignment request means which transmits an assignment request to the address of the management server stored in the address storage means when the address storage means does not store an address of the information processing device to be assigned to the self terminal and receives the address of the information processing device to be assigned to the self terminal from the management server to store the received address in the address storage means; and
remote control means which transmits operation information input to an input device of the terminal to the address of the information processing device when the address storage means stores the address of the information processing device to be assigned to the self terminal and receives image information from the information processing device to display the received image information on a display device of the terminal,
each of the information processing devices comprising remote control accepting means which receives the operation information from the terminal to perform an information processing in accordance with the content of operation indicated by the operation information and transmits image information indicating the result of the information processing to the terminal.

2. An information processing system according to claim 1, wherein each of the information processing devices further comprises network disconnection means which detects computer virus infection and notifies the management server of the computer virus infection to disconnect the self information processing device from the network.

3. An information processing system according to claim 2, wherein:
each of the information processing devices further comprises error notification means which detects an error in the information processing device main body to notify the management server of the error,
the management server further comprises:
operation status management means which stores an operation status of each of the plurality of information processing devices;
operation status management means which modifies, in response to a notification of virus infection, the operation status of the information processing device corresponding to a source of the notification stored in the operation status storage means to a virus infection status and modifies, in response to a notification of the error, the operation status of the information processing device corresponding to a source of the notification stored in the operation status storage means to a failure status; and
query response means which uses, in response to a notification of a status query, the assignment status storage means to specify the information processing device to be assigned to the terminal corresponding to a source of the notification, notifies the terminal corresponding to the source of the notification of a virus infection status when the operation status of the specified information processing device stored in the operation status storage means is the virus infection status, notifies the terminal corresponding to the source of the notification of a failure status when the operation status of the specified information processing device stored in the operation status storage means is the failure status, and transmits an address of the information processing device whose terminal assignment status stored in the assignment status storage means indicates an unassigned status to the terminal corresponding to the source of the notification;
the terminal further comprises status query means which transmits a status query to an address of the management server stored in the address storage means when there is no response to the access to the address of the information processing device assigned to the terminal itself, which is stored in the address storage means, and receives an address of the information processing device temporarily assigned to the self terminal from the management server to store the received address in the address storage means; and
the remote control means of the terminal transmits the operation information input to the input device of the terminal to the address of the information processing device when the address of the information processing device temporarily assigned to the self terminal is stored in the address storage means and receives image information from the information processing device to display the received image information on the display device of the terminal.

4. An information processing system according to claim 3, wherein:
the query response means of the management server notifies, in response to the notification of the status query, the terminal corresponding to the source of the notification of a failure status and confirmation whether or not to temporarily assign the information processing device when the operation status of the specified information processing device is the failure status and transmits an address of the information processing device indicating that the terminal assignment status stored in the assignment status storage means is an unassigned status only when a notification that the information processing device is to be temporarily assigned is received from the terminal corresponding to the source of the notification; and
the status query means of the terminal displays the notification of the confirmation whether or not to temporarily assign the information processing device received from the management server on the display device of the terminal and notifies the management server whether or not the temporary assignment input to the input device of the terminal is performed.

5. An information processing system according to claim 3 or 4, wherein:
the error notification means of the information processing device notifies the management server that the information processing device main body has recovered from the error;
the status query means of the terminal transmits a recovery query of the information processing device to be assigned to the self terminal to an address of the management server stored in the address storage means when the address of the information processing device to be temporarily assigned to the self terminal is stored in the address storage means and deletes the address of the information processing device to be temporarily assigned to the self terminal from the address storage means when a notification that the information processing device has recovered is received from the management server;
the status management means of the management server modifies, in response to the notification of recovery, the operation status of the information processing device corresponding to the source of the notification stored in the operation status storage means to a normal status; and
the query response means of the management server notifies, in response to the notification of the recovery query, the terminal corresponding to the source of the notification of the normal status when the operation status of the specified information processing device is the normal status.

6. An information processing system according to any preceding claim, wherein the address storage means is a device independent of the terminal, which is configured to be communicable with the terminal.

7. A management server which manages a plurality of information processing devices to be assigned to terminals, comprising:
assignment status storage means which stores a terminal assignment status of each of the plurality of information processing devices; and
assignment management means which notifies, in response to an assignment request, the terminal having transmitted the assignment request of an address of the information processing device whose terminal assignment status stored in the assignment status storage means is an unassigned status and updates the terminal assignment status of the information processing device stored in the assignment status storage means from the unassigned status to a status indicating that the information processing device is to be assigned to the terminal having transmitted the assignment request.

8. A management server which manages a plurality of information processing devices to be assigned to terminals, comprising:
operation status storage means which stores an operation status of each of the plurality of information processing devices;
operation status management means which modifies, in response to a notification of virus infection, an operation status of the information processing device corresponding to a source of the notification stored in the operation status storage means to a virus infection status and modifies, in response to a notification of an error, the operation status of the information processing device corresponding to a source of the notification stored in the operation status storage means to a failure status; and
query response means which uses, in response to a notification of a status query, the assignment status storage means to specify the information processing device to be assigned to the terminal corresponding to a source of the notification, notifies the terminal corresponding to the source of the notification of a virus infection status when the operation status of the specified information processing device stored in the operation status storage means is the virus infection status, notifies the terminal corresponding to the source of the notification of a failure status when the operation status of the specified information processing device is the failure status, and transmits the address of the information processing device whose terminal assignment status stored in the assignment status storage means is an unassigned status to the terminal corresponding to the source of the notification.

9. A terminal which remotely controls an information processing device assigned by a management server, comprising:
assignment request means which transmits an assignment request to an address of the management server stored in address storage means when an address of the information processing device to be assigned to the self terminal is not stored in the address storage means which stores at least the address of the management server, receives the address of the information processing device to be assigned to the self terminal from the management server and stores the received address in the address storage means; and
remote control means which transmits operation information input to an input device of the terminal to the address of the information processing device when the address of the information processing device to be assigned to the self terminal is stored in the address storage means, receives image information from the information processing device, and displays the received image information on a display device of the terminal.

10. An information processing device assigned to a terminal by a management server, comprising:
remote control accepting means which receives operation information from the terminal, performs an information processing in accordance with the content of operation indicated by the operation information, and transmits image information indicating the result of the information processing to the terminal; and
network disconnection means which detects computer virus infection, notifies the management server of the computer virus infection and disconnects the self information processing device from the network.

11. A method of assigning an information processing device to a terminal in an information processing system,
the information processing system comprising: a plurality of information processing devices; a management server which manages the information processing devices; and a plurality of terminals, the plurality of information processing devices, the management server, and the plurality of terminals being connected to each other through a network,
the method comprising the steps of:
notifying, in response to an assignment request, the terminal that has transmitted the assignment request of an address of the information processing device whose terminal assignment status is an unassigned status among the plurality of information processing devices, and updating the terminal assignment status of the information processing device from the unassigned status to a status indicating that the information processing device is assigned to the terminal that has transmitted the assignment request,
the step being executed by the management server;
transmitting the assignment request to the management server when the address of the information processing device to be assigned to the self terminal is not stored, and receiving the address of the information processing device to be assigned to the self terminal from the management server to store the received address,
the step being executed by the terminal;
transmitting operation information input to an input device of the terminal to the address of the information processing device when the address of the information processing device to be assigned to the self terminal is stored, receiving image information from the information processing device, and displaying the received image information on a display device of the terminal;
the step being executed by the terminal; and
receiving the operation information from the terminal, performing an information processing in accordance with the content of operation indicated by the operation information, and transmitting the image information indicating the result of the information processing to the terminal,
the step being executed by the information processing device.
